# EUROPEAN PATENT APPLICATION

(11) **EP 1 892 814 A1**
(43) Date of publication of application: **27.02.2008**
(21) Application number: 06713606.9
(22) Date of filing: 13.02.2006
(51) Int. Cl.: H02K 5/08, H02K 1/06, H02K 3/44, H02K 16/02, H02K 21/12, H02K 21/22

(54) **TWIN ROTOR TYPE MOTOR**

(30) Priority: 20.07.2005 JP 2005209735
(71) Applicant: MATSUSHITA ELECTRIC INDUSTRIAL CO., LTD., Osaka 571-8501 (JP)
(72) Inventor: HIWAKI, Hideharu, 2-1-61, Shiromi, Chuo-ku, Osaka 540-6207 (JP); KOSHIBA, Atsuyoshi, c/o Matsushita Electric Ind. Co., Ltd., 7F Twin 21 OBP Panasonic Tower (JP); MURAKAMI, Hiroshi, c/o Matsushita Electric Ind. Co., Ltd., 7F Twin 21 OBP Panasonic Tower (JP)
(74) Representative: Grünecker, Kinkeldey, Stockmair & Schwanhäusser Anwaltssozietät
(86) International application number: PCT/JP2006/302464
(87) International publication number: WO 2007/010640

(57) **Abstract**

A stator of a twin rotor motor includes: an annular yoke; a plurality of outer teeth and outer slots provided on an outer circumference of the yoke; a plurality of inner teeth and inner slots provided on an inner circumference of the yoke; and a plurality of taroidally-wound coils on the yoke. A rotor of the twin rotor motor includes: an outer rotor provided with an outer permanent magnet facing the outer teeth; and an inner rotor provided with an inner permanent magnet facing the inner teeth. Furthermore, the stator is provided with a resin mold that seals the coils and has a mounting-tab.

## Description

### TECHNICAL FIELD

The present invention relates to a motor provided with a twin rotor.

### BACKGROUND ART

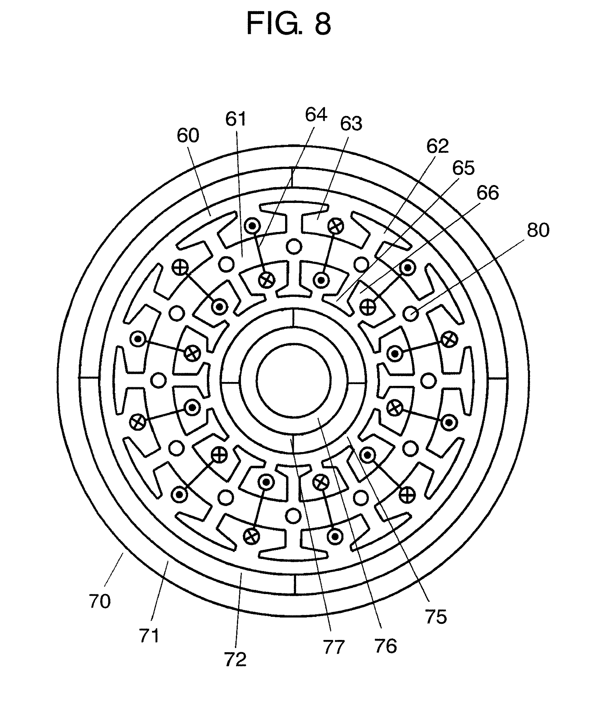

FIG. 8 shows a cross-sectional view of a conventional twin rotor motor. A related art is disclosed for instance in Japanese Unexamined Patent Application No. 2001-37133.

FIG. 8 shows a conventional toroidal brushless motor including stator 60 and outer rotor 70 and inner rotor 75. FIG. 8 shows a 4-pole/12-slot motor with the combination ratio of pole-pair number P to slot number Ns of 1 : 6 that is used in normal distributed winding arrangement.

Stator 60 includes: annular yoke 61; a plurality of outer teeth 62 and outer slots 63 provided on an outer circumference of yoke 61; and a plurality of inner teeth 65 and inner slots 66 provided on an inner circumference of yoke 61. Yoke 61 is provided with a plurality of coils 64 wound in toroidal shape across outer slots 63 and inner slots 66.

Meanwhile, two rotors 70 and 75 are provided outside and inside of stator 60. Outer rotor 70 includes outer permanent magnet 72 facing outer teeth 62 and outer yoke 71, and is held outside of stator 60 rotatably. Inner rotor 75 includes inner permanent magnet 77 facing inner teeth 65 and inner yoke 76, and is held inside of stator 60 rotatably.

Coils 64 are formed in three-phase star or delta connection. When coils 64 are energized, outer rotor 70 and inner rotor 75 start rotating all together to a predetermined direction by a torque generated by magnetic field by current-flow through coils 64.

Stator 60 is provided with a plurality of mounting-holes 80 at intersections of outer teeth 62 and inner teeth 65 on annular yoke 61. Mounting-holes 80 run through yoke 61.

Since a twin rotor motor has outer rotor 70 and inner rotor 75 on outside and inside of stator 60 respectively, stator 60 cannot be fixed by usual fitting methods such as shrink-fitting or press-fitting. Therefore, mounting-holes 80 are provided so as to enable stator 60 to be fixed on a machine by inserting bolts or the like (not shown) through mounting-holes 80 as shown in FIG. 8.

The conventional fitting method is disclosed in a technical document: IEEE TRANSACTIONS ON INDUSTRY APPLICATIONS, VOL. 40, NO 3, MAY/JUNE 2004. In "Section A. Flux Distribution" of the paper: "Design and Parameter Effect Analysis of Dual-Rotor, Radial-Flux, Toroidally-Wound, Permanent-Magnet Machines" on page 774 in the document, it is described that the bolt-holes will increase leakage flux, causing stator core to decrease in flux density by 15%.

The conventional twin rotor motor can be provided with mounting-holes 80 to fix stator 60 on the machine, which however requires areas for forming mounting-holes somewhere in yoke 61.

To minimize influences on the motor performance, mounting-holes 80 should preferably be formed at intersections of outer teeth 62 and inner teeth 65 on annular yoke 61 as shown in FIG. 8. Especially, along with an increasing motor torque, bolts are required to have a higher fixing strength, which will need a larger diameter for mounting-hole 80.

In cases like this, it sometimes occurs that the width required to keep mechanical strength for fixing is larger than widths of yoke 61, outer teeth 62 or inner teeth 65 that are required for magnetic circuit designing. Therefore, because for instance the larger the width of outer teeth 62 or inner teeth 65 the smaller the area of slots become, the current density will increase to cause reliability problems, and then, enlarging the slot area to restrict the increase in current density will shorten the outer diameter of inner rotor 75, causing the motor to decrease in torque force. Enlarged yoke width will also shorten the outer diameter of inner rotor 75, causing the motor to decrease in torque force. As a result, forming mounting-holes 80 will cause difficulty in obtaining full performance of the motor.

### SUMMARY OF THE INVENTION

A twin rotor motor of the present invention has the following configuration.

A stator comprising: an annular yoke; a plurality of outer teeth and outer slots provided on an outer circumference of the yoke; a plurality of inner teeth and inner slots provided on an inner circumference of the yoke; and a plurality of toroidally-wound coils on the yoke.

A rotor comprising: an outer rotor provided with an outer permanent magnet facing the outer teeth; and an inner rotor provided with an inner permanent magnet facing the inner teeth.

Moreover, the stator is provided with a resin mold that seals the coils and has a mounting-tab. The configuration can provide the twin rotor motor with high performance without causing poor properties such as decrease in motor efficiency or torque force.

### BRIEF DESCRIPTION OF THE DRAWINGS

FIG. 1 shows a cross-sectional view of a twin rotor motor used in preferred embodiment 1 of the present invention.
FIG. 2 shows a detailed cross-sectional view of a stator of the above.
FIG. 3 shows an axial cross-sectional view taken along a plane A - O in FIG. 1.
FIG. 4 shows an axial cross-sectional view of a twin rotor motor used in preferred embodiment 2 of the present invention.
FIG. 5 shows an axial cross-sectional view of a twin rotor motor used in preferred embodiment 3 of the present invention.
FIG. 6 shows a cross-sectional view of a twin rotor motor used in preferred embodiment 4 of the present invention.
FIG. 7 shows a detailed cross-sectional view of a stator of the above.
FIG. 8 shows a cross-sectional view of a conventional twin rotor motor.

### Reference marks in the drawings

- 10.: stator
- 11.: yoke
- 12.: outer teeth
- 13.: outer slot
- 14.: coil
- 15.: inner teeth
- 16.: inner slot
- 20.: outer rotor
- 21.: outer yoke
- 22, 22B: outer permanent magnet
- 24, 29, 41: output shaft
- 25: inner rotor
- 26: inner yoke
- 27, 27B: inner permanent magnet
- 30, 30A: resin mold
- 31: mounting-tab

### DETAILED DESCRIPTION OF THE PREFERRED EMBODIMENTS

A preferred embodiments of the present invention are described below with reference to the drawings.

### (Preferred embodiment 1)

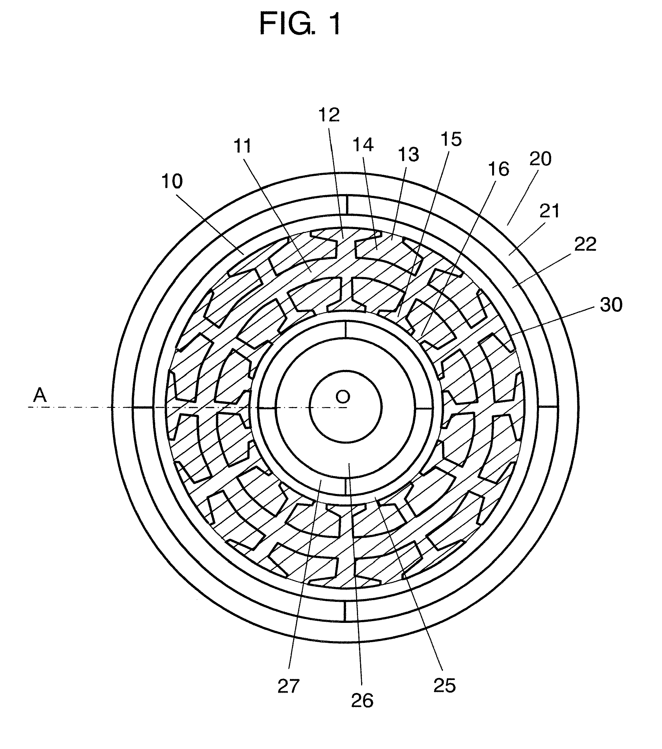

FIG. 1 shows a cross-sectional view of a twin rotor motor used in preferred embodiment 1 of the present invention, illustrating a brushless motor provided with three phase toroidally-wound coils. The twin rotor motor of the present invention includes stator 10, outer rotor 20 and inner rotor 25 as shown in FIG. 1. FIG. 1 shows a 4-pole/12-slot motor with a combination ratio of pole-pair number P to slot number Ns of 1 : 6.

Stator 10 includes: annular yoke 11; a plurality of outer teeth 12 and outer slots 13 provided on an outer circumference of yoke 11; and a plurality of inner teeth 15 and inner slots 16 provided on an inner circumference of yoke 11. Yoke 11 is provided with a plurality of coils 14 wound toroidally across outer slots 13 and inner slots 16. Resin mold 30 is provided to seal coils 14 as indicated by hatching in FIG. 1.

Meanwhile, two rotors 20 and 25 are provided outside and inside of stator 10. Outer rotor 20 includes outer permanent magnet 22 facing outer teeth 12 and outer yoke 21. Inner rotor 25 includes inner permanent magnet 27 facing inner teeth 15 and inner yoke 26. Both outer permanent magnet 22 and inner permanent magnet 27 are magnetized to form four poles (pole-pair number = 2).

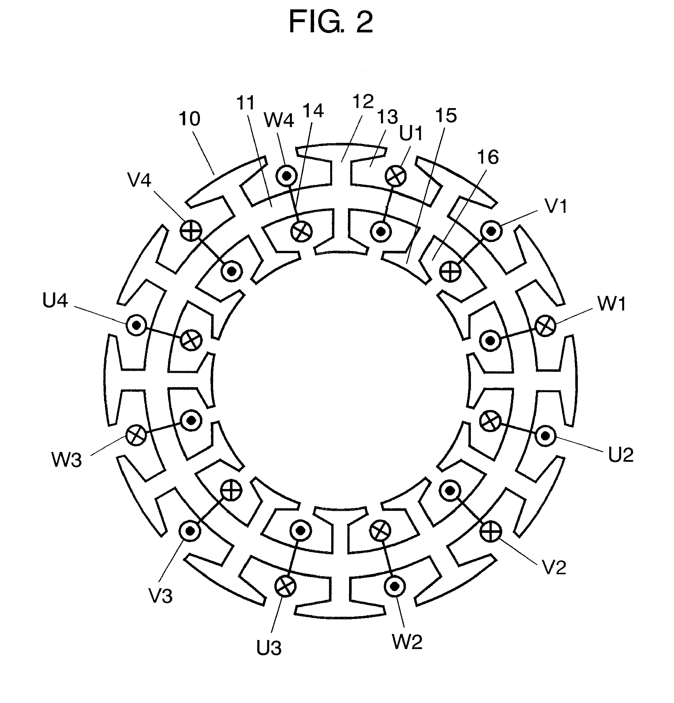

FIG. 2 shows an extracted cross-sectional view of an area sealed by resin mold 30 in stator 10 in FIG. 1. Coils 14 include individual coils of U1, V1, W1, U2, V2, W2, U3, V3, W3, U4, V4 and W4 toroidally-wound across respective outer slots 13 and inner slots 16 in yoke 11, and they are connected in three-phase star or delta connection. When energized coils 14 generate torques, then outer rotor 20 and inner rotor 25 start rotating all together to a predetermined direction.

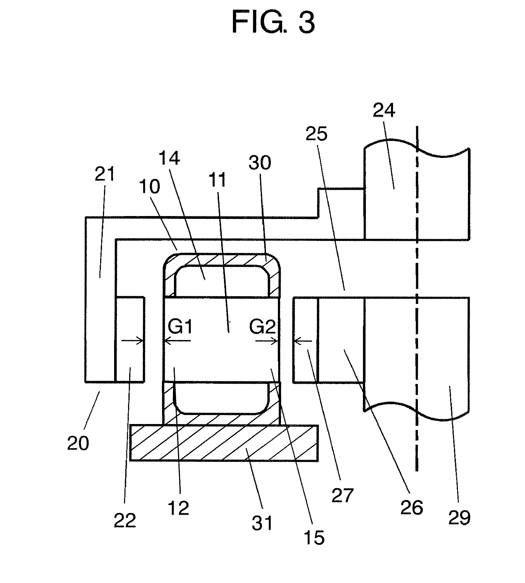

FIG. 3 shows a cross-sectional view taken along the plane A - O in FIG. 1. Outer yoke 21 of outer rotor 20 extends toward inner circumference and is attached to outer rotor output shaft 24, which is supported rotatably. Inner rotor 25 is attached to inner rotor output shaft 29 via inner yoke 26, and shaft 29 is supported rotatably. Outer teeth 12 face outer permanent magnet 22 via air-gap G1 and inner teeth 15 face inner permanent magnet 27 via air-gap G2. Each of two output shafts 24 and 29 can be allowed to rotate in different directions or in different speeds respectively.

Stator 10 is provided with resin mold 30 so as to seal coils 14. Resin mold 30 improves the heat dissipation property of coils 14 effectively.

Furthermore, resin mold 30 has mounting-tab 31. Mounting-tab 31 should preferably be molded integrally with resin mold 30. Mounting-tab 31 can be fixed on a machine for instance by using bolts or the like into through-holes drilled axially. The fixing method on the machine is not limited to bolting only but crimping or welding are available. Though pedestal-shaped mounting-tab 31 is shown in FIG. 3, the mounting-tab is not limited only to such a shape. Eliminating the pedestal-shaped portion, resin mold 30 for sealing the coils can be for instance bolted directly or be fixed on the machine by welding a plurality of projections formed beneath.

As described above, mounting-tab 31 molded integrally with resin mold 30 can eliminate through-holes provided on yoke 11 of the stator core and the shape of stator 10 can be determined by the design factors of the magnetic circuit only that have decisive influences on the motor properties. The configuration, therefore, can realize the twin rotor motor with a high performance without causing any decrease in motor properties due to taking the fixing method on the machine into account.

### (Preferred embodiment 2)

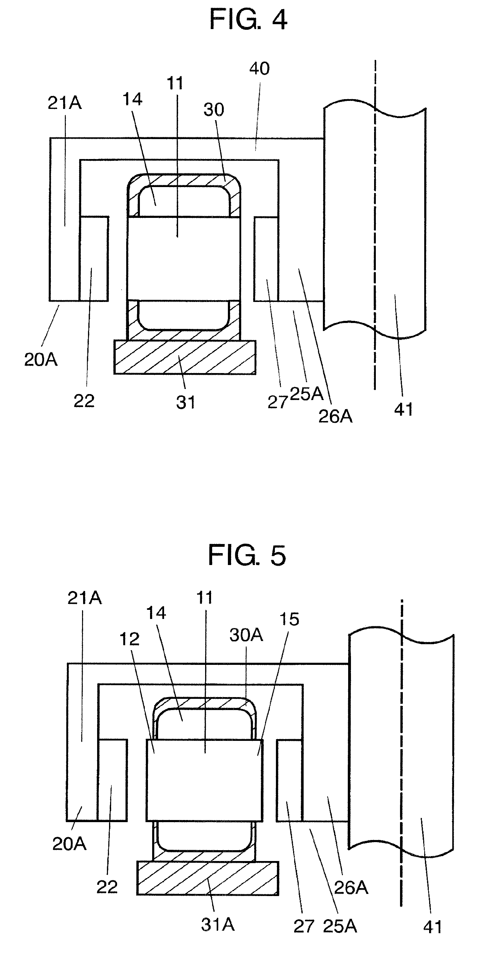

FIG. 4 shows an axial cross-sectional view of a twin rotor motor used in preferred embodiment 2 of the present invention. Elements similar to embodiment 1 have the same reference marks and detailed descriptions are omitted. In embodiment 2, the stator is the same as in embodiment 1, only the rotor is different.

In FIG. 4, outer yoke 21A of outer rotor 20A extends toward inner circumference and is attached to inner yoke 26A forming inner rotor 25A to form inner/outer rotor yoke 40. Inner/outer rotor yoke 40 is attached to output shaft 41.

In this way, being the rotor output shafts united into a single output shaft, the motor output shaft will have the sum of output torques of outer rotor 20A and inner rotor 25A consequently. The motor, therefore, will have a higher output torques.

As described above, inner/outer rotor yoke 40, which is necessary for attaching outer rotor 20A with inner rotor 25A, is formed so as to cover one side in axial direction of stator 10. Therefore, it is very difficult to form through- holes on yoke 11 of stator core for fixing rotors on the machine. As described in this embodiment, however, the motor can be fixed on the machine very easily by using mounting-tab 31 molded on resin mold 30 integrally.

### (Preferred embodiment 3)

FIG. 5 shows an axial cross-sectional view of a twin rotor motor used in preferred embodiment 3 of the present invention. Elements similar to embodiment 1 and 2 have the same reference marks and detailed descriptions are omitted. In this embodiment, the rotors are the same as in embodiment 2, only the stator is different.

In this embodiment, the shape of resin mold 30A differs from embodiment 1 and 2. Namely, the structure is such that resin mold 30A is shortened radially so as to expose the respective tops of outer teeth 12 and inner teeth 15. The exposing structure can be applied to either or both of outer teeth 12 and inner teeth 15.

The resin mold 30A sealing coil 14 improves heat dissipation and acts to restrict temperature increase in coil 14. In this embodiment, however, the effect can be obtained sufficiently by resin mold 30A only that has the minimum necessary amount of resin, thus reducing material usages.

Moreover, the tops of outer teeth 12 and inner teeth 15 in the exposed structure can be used for positioning in motor assembling. Especially, the twin rotor motor such as described in the present invention needs a high accuracy in coaxiality or the like between stator and outer and inner rotors compared with normal motors. At this time, both radial surfaces of outer teeth 12 and inner teeth 15 and an axial end surface can be used for positioning in assembling, causing a great effect on assembling the motor highly accurately.

### (Preferred embodiment 4)

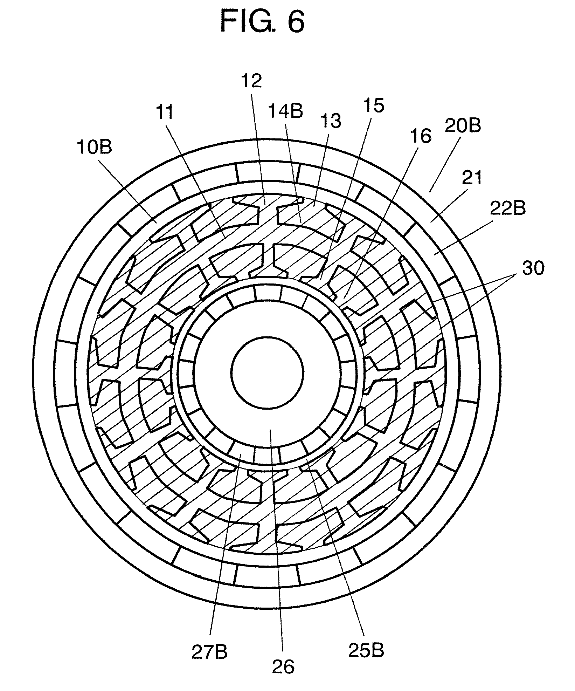

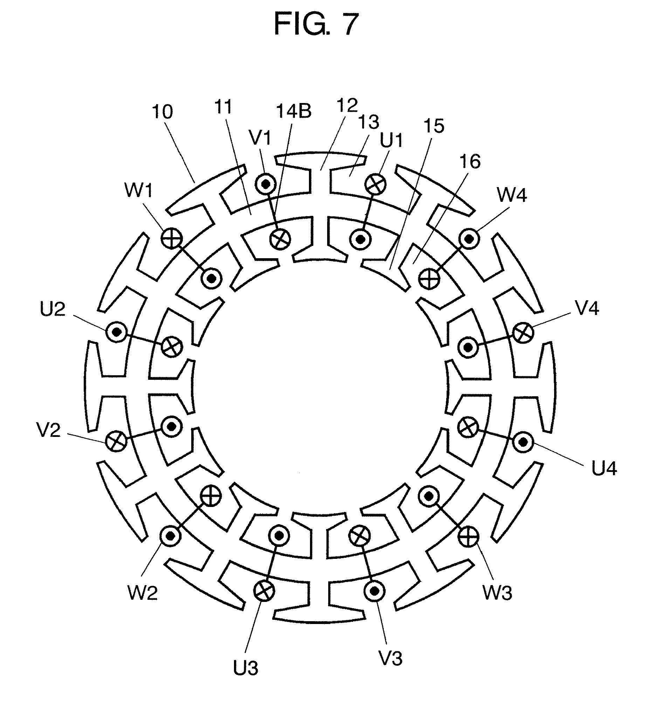

FIG. 6 shows a cross-sectional view of a twin rotor motor used in preferred embodiment 4 of the present invention. FIG. 7 shows an extracted cross-sectional view of an area sealed by resin mold 30 in stator 10B. Elements similar to embodiment 1 have the same reference marks and detailed descriptions are omitted. In this embodiment, the pole-pair number of permanent magnets and the coil winding way differ from embodiment 1.

The embodiment shows a 20-pole/12-slot twin rotor motor with the combination ratio of pole-pair number P to slot number Ns of P : Ns =5 : 6.

Two rotors 20B and 25B are provided outside and inside of stator 10B respectively. Outer rotor 20B includes outer permanent magnets 22B facing outer teeth 12 and outer yoke 21. Inner rotor 25B includes inner permanent magnets 27B facing inner teeth 15 and inner yoke 26. Outer permanent magnets 22B and inner permanent magnets 27B are both magnetized to have 20 poles (pole-pair number P = 10).

FIG. 7 shows a coil arrangement to realize this embodiment. Toroidally-wound individual coils: U1, V1, W1, U2, V2, W2, U3, V3, W3, U4, V4 and W4 are arranged in a reverse direction to the rotation compared with FIG. 2.

In case of the combination ratio of pole-pair number P to slot number Ns of P : Ns = 5 : 6 as described in this embodiment, the torque constant of the motor is the same as that of P : Ns = 1 : 6 in embodiment 1. Meanwhile, increase in pole-pair number causes stator core 12 to decrease in flux density. This means that iron loss generated in the stator core decreases, thus improving the motor efficiency consequently.

Meanwhile, coil 14B provided on yoke 11 can be formed by changing the coil arrangement only with the toroidal shape kept unchanged as shown in FIG. 7, causing no increase in copper loss or the like which causes poor efficiency, or causing no torque fluctuation or irregular rotation which generates noises.

Furthermore, the fact that the flux density decreases in the stator core means that teeth 12 and 15 or yoke 11 can be designed narrower in width without any decrease in torque force. When for instance teeth 12, 15 and yoke 11 are designed narrower in width while keeping the same slot area, the outer diameter of inner rotor can be enlarged to improve torque property or motor efficiency. Narrowing the width of yoke 11 is able to have an effect of a shorter perimeter length of coil 14B and accordingly a decrease in copper loss due to reduced coil resistance.

As described above, the configuration of this embodiment can realize the twin rotor motor with a high efficiency.

### INDUSTRIAL APPLICABILITY

The twin rotor motor is provided with a resin mold to seal coils on a stator, and a mounting-tab formed integrally on the resin mold can eliminate through-holes in a yoke of stator core to fix the stator on a machine. The configuration can provide the twin rotor motor generating a high torque force efficiently without causing poor motor properties due to taking the fixing way on the machine into account.

## Claims

1. A twin rotor motor comprising:
a stator comprising;
an annular yoke,
a plurality of outer teeth and outer slots provided on an outer circumference of the yoke,
a plurality of inner teeth and inner slots provided on an inner circumference of the yoke,
and
a plurality of toroidally-wound coils on the yoke, and
a rotor comprising;
an outer rotor provided with an outer permanent magnet facing the outer teeth,
and
an inner rotor provided with an inner permanent magnet facing the inner teeth,
wherein the stator is provided with a resin mold and the resin mold seals the coils and has a mounting-tab.

2. The twin rotor motor of claim 1, wherein the coils are connected in one of a three-phase star connection and a three-phase delta connection.

3. The twin rotor motor of claim 1, wherein each of the outer rotor and the inner rotor has an output shaft individually.

4. The twin rotor motor of claim 1, wherein the outer rotor and the inner rotor together have one output shaft united integrally.

5. The twin rotor motor of claim 1, wherein at least one of tops of the outer teeth and the inner teeth is exposed.

6. The twin rotor motor of claim 1, wherein the outer permanent magnet and the inner permanent magnet have a same number of pole-pair.

7. The twin rotor motor of claim 6, wherein the outer slots and the inner slots have a same number of slots, and a ratio of the number of pole-pair to the number of slot is 1 to 6.

8. The twin rotor motor of claim 6, wherein the outer slots and the inner slots have a same number of slots, and a ratio of the number of pole-pair to the number of slot is 5 to 6.
